# FASCICULE DE BREVET EUROPEEN

(11) **EP 1 609 766 B1**
(45) Date de publication et mention de la délivrance du brevet: **03.11.2010**
(21) Numéro de dépôt: 05108784.9
(22) Date de dépôt: 04.10.2002
(51) Int. Cl.: C03B 5/235, C03B 3/00, C03B 5/04

(54) **Procédé de préparation de matières premières pour la fabrication de verre**
Verfahren zur Herstellung von Glasrohstoffen
Method for making glass raw materials

(30) Priorité: 08.10.2001 FR 0113021
(43) Date de publication de la demande: 28.12.2005
(62) Demande divisionnaire de: 02800634.4
(73) Titulaire: SAINT-GOBAIN GLASS FRANCE, 92400 Courbevoie (FR)
(72) Inventeur: Jeanvoine, Pierre, 78300 Poissy (FR); Le Verge, Arnaud, 75004 Paris (FR)
(74) Mandataire: Colombier, Christian

(56) Documents cités:
- WO-A-00/46161
- FR-A- 1 211 098

## Description

L'invention concerne un procédé de préparation de certaines des matières que l'on peut utiliser pour fabriquer du verre.

Dans le contexte de la présente invention, on comprend par " matières premières " tous les matériaux, matières vitrifiables, minerais naturels ou produits synthétisés, matériaux issus de recyclage du type calcin etc..., qui peuvent entrer dans la composition venant alimenter un four verrier. De même, on comprend par "verre" le verre au sens large, c'est-à-dire englobant tout matériau à matrice vitreuse, vitrocéramique ou céramique. Le terme de " fabrication " comprend l'étape de fusion indispensable des matières premières et éventuellement toutes les étapes ultérieures/complémentaires visant à affiner/conditionner le verre en fusion en vue de sa mise en forme définitive, notamment sous forme de verre plat (vitrages), de verre creux (flacons, bouteilles), de verre sous forme de laine minérale (verre ou roche) utilisée pour ses propriétés d'isolation thermique ou phonique ou même éventuellement de verre sous forme de fils dits textile utilisés dans le renforcement.

L'invention s'intéresse tout particulièrement aux matières premières nécessaires pour fabriquer les verres ayant une teneur significative en alcalins, notamment en sodium, par exemple les verres de type silico-sodo-calcique utilisés pour faire du verre plat. La matière première actuellement la plus fréquemment utilisés pour apporter le sodium ou le potassium est le carbonate de sodium Na₂CO₃ ou le carbonate de potassium K₂CO₃, choix qui n'est pas dénué d'inconvénients. En effet, d'une part ce composé n'apporte que le sodium comme élément constitutif du verre, toute la partie carbonée se décomposant sous forme de dégagements de CO₂ lors de la fusion. D'autre part, il s'agit d'une matière première onéreuse, comparativement aux autres, car c'est un produit de synthèse, obtenu par le procédé Solvay à partir de chlorure de sodium et de calcaire, procédé imposant un certain nombre d'étapes de fabrication et assez peu économe en énergie.

C'est la raison pour laquelle on a proposé d'utiliser comme source de sodium non pas un carbonate mais un silicate, éventuellement sous forme d'un silicate mixte d'alcalins (Na) et d'alcalino-terreux (Ca) que l'on prépare préalablement. L'utilisation de ce type de produit intermédiaire a l'avantage d'apporter conjointement plusieurs des constituants du verre, de supprimer la phase de décarbonatation, et de réduire les émissions de CO₂ du four de fusion. Elle permet également d'accélérer la fusion des matières premières dans leur ensemble, et de favoriser leur homogénéisation en cours de fusion, comme cela est indiqué, par exemple, dans les brevets FR-1 211 098 et FR-1 469 109. Cependant, cette voie pose le problème de la fabrication de ce silicate.

Un premier mode de synthèse a été décrit dans le brevet WO-00/46161 : il s'agit de convertir un halogénure, par exemple du NaCl, et de la silice en silicate à haute température, l'apport thermique étant fourni à l'aide de brûleurs immergés. La combustion par brûleurs immergés était déjà connue, par exemple des brevets US-3 627 504, US-3 260 587 ou US-4 539 034, pour assurer la fusion de matières vitrifiables pour faire du verre. Utiliser cette technologie dans le contexte différent de la synthèse de silicates, en amont donc de la fabrication à proprement dite du verre, apporte en effet beaucoup d'avantages : ce mode de combustion provoque au sein des matières en cours de réaction de fortes turbulences, de forts mouvements de convection autour des flammes ou jets de gaz des brûleurs immergés, ce qui favorise un brassage très efficace des réactifs. En outre, les brûleurs immergés apportent directement la chaleur là ou elle est nécessaire, dans la masse des produits en cours de réaction. C'est également un mode de combustion respectueux de l'environnement.

Pour plus de détails sur les différentes réactions en jeu, on pourra se reporter au brevet WO-00/46161 prémentionné.

La conversion directe de NaCl et de silice faite de cette façon est donc très attractive à plus d'un titre. Cependant, il s'est avéré que cette conversion directe était malaisée à mettre en oeuvre à grande échelle.

L'invention a alors pour but la mise au point d'un autre type de fabrication de silicate, qui puisse conserver les avantages de la technique précédemment décrite, tout en étant plus facile à utiliser à l'échelle industrielle. Accessoirement, on cherchera à ce que ce nouveau type de fabrication soit le plus respectueux possible de l'environnement et prenne en compte/valorise au mieux tous les produits de réaction impliqués autres que les silicates, silicates dont la fabrication reste l'objectif premier de la présente invention.

L'invention a tout d'abord pour objet un procédé de fabrication de composés à base de silicate(s) d'alcalins tels que Na, K et/ou d'alcalino-terreux tels que Ca, Mg et/ou de terres rares telle que Ce, éventuellement sous forme de silicates mixtes associant au moins deux de ces éléments, ledit procédé faisant intervenir une réaction de conversion (2) de sulfates desdits alcalins et/ou desdites terres rares et/ou desdits alcalino-terreux avec de la silice en silicates correspondants, l'apport thermique nécessaire à cette conversion étant fourni, au moins en partie, par une réaction de combustion (3) utilisant un ou une pluralité de brûleur(s) immergé(s), caractérisé en ce que pour mettre en oeuvre la réaction de combustion (3) on utilise au moins un combustible soufré et en ce que l'on récupère les oxydes de soufre obtenus par oxydation de composés soufrés lors de la réaction de combustion (3) ainsi que les oxydes de soufre obtenus lors de la réaction (2) de conversion des sulfates en silicates, et en ce qu'on leur fait subir une réaction de conversion en acide sulfurique.

Dans ce cadre, le procédé peut aussi faire intervenir :
(i) une réaction de conversion (1) d'halogénures, notamment de chlorures, desdits alcalins et/ou desdits alcalino-terreux et/ou desdites terres rares, en sulfates correspondants,
(ii) une réaction de conversion (2) desdits sulfates avec de la silice en silicates correspondants, l'apport thermique nécessaire à cette conversion étant fourni, au moins en partie, par une réaction de combustion (3) utilisant un ou une pluralité de brûleur(s) immergé(s).

Le procédé selon l'invention peut aussi ne comporter que l'étape (ii) selon la réaction(2).

On comprend ici sous le terme de « silice » tout composé contenant majoritairement de la silice (oxyde de silicium) SiO₂, même s'il peut également contenir d'autres éléments, d'autres composés minoritaires, ce qui est tout particulièrement le cas lorsqu'on utilise des matériaux naturels du type sable.

On comprend ici par « brûleurs immergés », des brûleurs configurés de manière à ce que les « flammes » qu'ils génèrent ou les gaz de combustion issus de ces flammes se développent dans le réacteur où s'opère la conversion, au sein même de la masse des matières en cours de transformation. Généralement, ils se trouvent disposés de façon à affleurer ou à dépasser légèrement des parois latérales ou de la sole du réacteur utilisé (on parle ici de flammes, même s'il ne s'agit pas à proprement parlé des mêmes « flammes » que celles produits par des brûleurs aériens, pour plus de simplicité).

Le procédé décrit plus haut peut être un perfectionnement du procédé décrit dans le brevet WO-00/46161, en ce sens qu'il divise en deux étapes distinctes la réaction globale faisant intervenir un halogénure (comme du NaCl) et de la silice pour faire un silicate. Dans la présente invention, on a ainsi éventuellement une étape intermédiaire consistant à passer par la fabrication d'un sulfate. La faisabilité industrielle en est grandement améliorée : on évite ainsi d'avoir à « casser » thermiquement, à très haute température, un halogénure du type NaCl, ce qui tendait à provoquer une certaine volatilisation de NaCl dans le four où la réaction s'effectuait avec la silice. Au contraire, dans l'invention, l'étape (1) de conversion de l'halogénure en sulfate est plus facile à réaliser, peut se faire à une température relativement plus basse et dans des conditions opératoires déjà maîtrisées dans l'industrie chimique. L'étape (2) de conversion du sulfate en silicate par brûleurs immergés permet d'obtenir le produit désiré avec tous les avantages des brûleurs immergés évoqués dans le préambule de la présente demande.

Pour illustrer ces deux étapes, en vue de fabriquer du silicate de sodium, l'invention propose donc notamment les étapes successives suivantes :
(i) 2 NaCl + H₂SO₄ → Na₂SO₄ + 2 HCl
(ii) Na₂SO₄ + x SiO₂ → (SiO₂)ₓ - Na₂O + SO₂/SO₃

Pour cette deuxième réaction, la valeur de x peut varier, un exemple est notamment x = 2.

Le présent texte reviendra ultérieurement sur l'intérêt/la valorisation des réactifs/produits de réaction impliqués dans ces réactions, outre NaCl, SiO₂ et le silicate (SiO₂)ₓ - Na₂O.

L'efficacité des brûleurs à tous les niveaux (qualité du mélange, excellent transfert thermique), fait que la conversion selon la réaction (2) est grandement favorisée, et cela sans qu'il y ait nécessairement besoin d'atteindre des températures extrêmement élevées.

Un autre avantage des brûleurs immergés est le suivant : ils permettent l'introduction de combustibles liquides/solides de la même façon que les matières premières vitrifiables. De fait, cela conduit à l'obtention de redox élevés du silicate en fusion, ce qui est favorable à la réaction de décomposition des sulfates.

Le comburant choisi pour alimenter le(s) brûleur(s) immergé(s) dans la réaction (2) peut être simplement de l'air. De préférence, on privilégie cependant un comburant sous forme d'air enrichi en oxygène, et même sous forme substantiellement d'oxygène seul. Une forte concentration en oxygène est avantageuse pour différentes raisons : on diminue ainsi le volume des fumées de combustion, ce qui est favorable sur le plan énergétique et évite tout risque de fluidisation excessive des matières en cours de réaction pouvant provoquer des projections sur les superstructures, la voûte du réacteur ou s'opère la conversion. En outre, les « flammes » obtenues sont plus courtes, plus émissives, ce qui permet un transfert plus rapide de leur énergie aux matières en cours de fusion/conversion.

En ce qui concerne le choix du combustible pour le(s) brûleur(s) immergé(s), trois voies sont possibles, alternatives ou cumulatives : on peut choisir un combustible liquide, gazeux ou sous forme solide.

S'il est au moins partiellement sous forme gazeuse, il peut alimenter directement les brûleurs immergés. S'il est sous forme liquide, solide, on peut l'amener à proximité des brûleurs immergés.

Comme combustible gazeux, on peut citer le gaz naturel (majoritairement du méthane), du propane, de l'hydrogène, ou tout autre composé hydrocarboné et/ou soufré.

Comme combustible solide ou liquide, on peut citer tout composé majoritairement sous forme carbonée et/ou hydrocarbonée et/ou soufrée (incluant le soufre et le carbone) : comme dans le cas précédent, il peut s'agir de sous-produits de l'industrie pétrolière (fioul lourd, bitumes). Il peut aussi s'agir de matériaux à base de polymère que l'on va pouvoir ainsi recycler (tout matériau dit plastique, pneumatique, ...), et même du sable souillé d'hydrocarbure, qui va aussi fournir à la fois la silice et le combustible, ce qui est une façon ingénieuse de traiter le problème de la dépollution des plages après des marées noires par exemple.

En fait, une caractéristique particulièrement originale de la présente invention est que l'on utilise des combustibles contenant du soufre, voire même du soufre pur. On trouve des traces de soufre dans tous les polymères vulcanisés (pneumatique), on en trouve aussi dans des sous-produits de l'industrie pétrolière, et l'invention permet de les valoriser de façon intéressante : en effet, le soufre contenu dans le combustible fourni pour faire la réaction de combustion (3) va s'oxyder. Or, de façon connue dans l'industrie chimique/pétrolière, on peut transformer ces oxydes de soufre (_{SO2} et/ou SO₃) en acide sulfurique, en les récupérant dans les fumées et en les traitant de façon appropriée. On a alors deux choix (alternatif ou cumulatif en fait, notamment en fonction de la quantité de H₂SO₄ fabriquée, qui dépend étroitement du taux de S choisi dans le combustible) : soit on valorise H₂SO₄ comme réactif largement utilisé dans l'industrie chimique, indépendamment du procédé selon l'invention, soit on le ré-utilise dans le procédé de l'invention. En effet, la réaction (1) de conversion des halogénures en sulfates utilise avantageusement de l'acide sulfurique : on a aussi un procédé « en boucle » , où le produit de combustion de la réaction (2) est utilisé comme réactif, une fois transformé, dans la réaction (1).

Il y a une autre façon, alternative ou cumulative avec la précédente, pour fabriquer du H₂SO₄ à partir du procédé selon l'invention : la réaction (2) de conversion de sulfate en silicate produit elle aussi des oxydes de soufre SO₂ et/ou SO₃. On peut donc là aussi récupérer ces oxydes de soufre, et leur faire subir une réaction de conversion en acide sulfurique. Comme dans le cas précédent, on peut ré-utiliser cet acide sulfurique comme réactif dans la réaction (1) et/ou le valoriser comme réactif pour l'industrie chimique.

De fait, si le combustible contient une quantité significative en soufre, ces deux réactions de conversion d'oxydes de soufre en acide sulfurique peuvent produire plus, et même significativement plus, d'acide sulfurique que ce qui est nécessaire pour la réaction (1) de conversion des halogénures en sulfates, ce qui valorise le procédé selon l'invention dans son ensemble.

Il y a un autre produit de réaction dans le procédé de l'invention qui est valorisable dans l'industrie chimique notamment, c'est l'acide chlorhydrique HCl, fabriqué lors de la réaction (1) de conversion des halogénures en sulfates, quand l'halogénure en question est un chlorure du type NaCl.

On peut bien sûr le traiter comme un effluent, que l'on peut neutraliser avec du carbonate de calcium CaCO₃, ce qui revient à fabriquer du CaCl₂, utilisable par exemple pour le déneigement des routes. On peut aussi considérer HCl comme un produit chimique de base largement utilisé dans l'industrie chimique (tout comme H₂SO₄), et l'extraire des fumées pour établir une filière de production industrielle d'HCl. On a alors intérêt a implanter le dispositif de mise en oeuvre de cette réaction (1) dans le site de l'industrie chimique ayant besoin de ce type de produits chlorés.

Un premier débouché pour les silicates fabriqués selon l'invention concerne l'industrie verrière : ils peuvent se substituer, au moins pour partie, aux matières premières traditionnelles pourvoyeuses d'alcalins ou de terres rares, avec, tout particulièrement en ce qui concerne le sodium, une substitution au moins partielle du Na₂CO₃ par Na₂O-(SiO₂)ₓ. On peut donc employer les silicates de l'invention pour alimenter un four verrier.

Il peut être nécessaire de faire subir une étape de traitement du type granulation au silicate formé selon l'invention avant introduction dans le four verrier. Le four verrier peut être de conception traditionnelle (par exemple four à fusion électrique par électrodes immergées, four à brûleurs aériens fonctionnant avec des régénérateurs latéraux, four à boucle, et tout type de four connu dans l'industrie verrière incluant ainsi les fours à brûleurs immergés), avec éventuellement une conception et un mode de fonctionnement légèrement adaptés à un processus de fusion sans carbonate ou avec moins de carbonate que pour les fusions standards.

Il est à noter que certains silicates autres que le silicate de sodium sont également très intéressants à fabriquer selon l'invention. Ainsi, l'invention permet de fabriquer du silicate de potassium à partir de KCI, ce qui est, économiquement au moins, très avantageux comme matière première porteuse de Si et de K pour fabriquer des verres dits "à alcalins mixtes ", c'est-à-dire contenant à la fois Na et K. Ces verres sont notamment utilisés pour faire des écrans tactiles, des verres d'écran de télévision, des verres pour écran plasma de visualisation ("Plasma Display Panel " en anglais).

De même, l'invention permet de fabriquer de façon plus économique des verres spéciaux contenant des additifs pour lesquels les chlorures sont moins chers que les oxydes. C'est le cas des terres rares comme le cérium : la présence d'oxyde de cérium conférant des propriétés anti-U.V. aux verres, et les terres rares de ce type rentrent aussi dans la composition de verres spéciaux à haut module élastique pour disque dur. L'invention permet ainsi d'avoir une matière première porteuse de Si et de Ce, le silicate de cérium, à un coût modéré.

Un second débouché pour les silicates fabriqués selon l'invention (à part être utilisés comme matières premières pour four verrier), plus particulièrement le silicate de soude, concerne l'industrie des détergents ; le silicate de soude entrant fréquemment dans la composition des lessives/détergents.

Un troisième débouché pour les silicates (et éventuellement les dérivés chlorés) formés selon l'invention concerne la préparation de silices particulières, désignées communément sous le terme de "silices précipitées " entrant par exemple dans la composition des bétons. On peut en effet opérer une attaque acide des silicates formés selon l'invention, avantageusement par de l'acide sulfurique, de manière à faire précipiter de la silice sous forme de particules ayant une granulométrie particulière : la dimension des particules visée est généralement nanométrique (1 à 100 nm par exemple).

Pour mettre en oeuvre la réaction (1) de conversion des halogénures en sulfates, on peut utiliser un réacteur connu dans l'industrie chimique sous le terme de four Mannheim.

Pour mettre en oeuvre la réaction (2) de conversion des sulfates en silicates, on peut utiliser, comme décrit dans le brevet WO-00/46161, un réacteur équipé de brûleur(s) immergé(s) et d'au moins un moyen d'introduction de la silice et/ou des sulfates sous le niveau des matières en fusion, notamment sous la forme d'une ou plusieurs enfourneuses à vis sans fin. Il en est de même, de préférence, pour les combustibles solides ou liquides éventuellement utilisés, comme les composés carbonés et/ou hydrocarbonés et/ou soufrés (incluant le soufre et le carbone) précédemment mentionnés. On peut ainsi introduire directement au sein de la masse des produits en cours de fusion/réaction au moins ceux des réactifs de départ susceptibles de se vaporiser avant d'avoir le temps de réagir.

Pour optimiser sur le plan énergétique l'ensemble du procédé, on peut récupérer la chaleur des fumées du réacteur à brûleurs immergés utilisé pour la réaction (2) et l'utiliser pour contribuer à l'apport thermique nécessaire à la réaction (1) dans le four de type Mannheim.

Le procédé selon l'invention précédemment décrit comporte donc beaucoup d'avantages, parmi lesquels :
➢ une diminution des émissions de CO₂ dans les fours verriers qui substituent tout ou partie du carbonate de sodium par du silicate de sodium, une consommation énergétique plus faible de ces fours car on diminue ou on supprime les réactions de décarbonatation,
➢ une valorisation de l'halogène de l'halogénure de départ, notamment sous forme HCl quand il s'agit d'un chlorure,
➢ une possibilité de faire tourner le procédé en boucle, avec ré-utilisation du sous-produit H₂SO₄ fabriqué,
➢ une possibilité de valoriser en tant que combustible des dérivés soufrés.

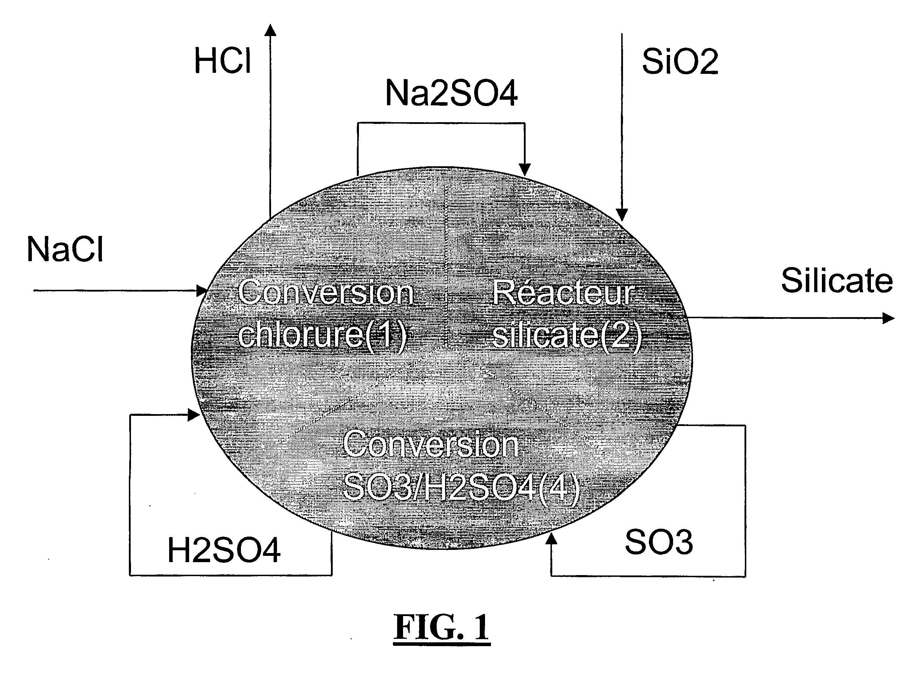

L'invention sera détaillée ci-après à l'aide d'exemples non limitatifs, et à l'aide d'une figure 1 :
□ **figure 1 :** un schéma d'une variante préférée du procédé selon l'invention, fonctionnant en boucle.

Les deux exemples selon l'invention concernent tous les deux la fabrication de silicate de sodium à partir de chlorure de sodium et d'acide sulfurique, selon la variante illustrée à la figure 1.

Reprenons en détail le processus réactionnel, en trois grandes étapes, représenté sous forme d'une boucle à la figure 1 : le but des deux exemples est de fabriquer 1000 kg de silicate de sodium de formule Na2O-(SiO₂)₂, soit 5489 moles. On considère que les rendements des réactions impliquées sont de 100%.

### 1 - Synthèse du sulfate de sodium

| | 2 NaCl + H₂SO₄ → Na₂SO₄ + 2 HCl | | | |
|---|---|---|---|---|
| quantité en moles | 2 x 5489 | 5489 | 5489 | 2 x 5489 |
| quantité en kg | 642 | 538 | 779 | 401 |

Cette étape se fait dans un four Mannheim de façon connue.

### 2- Synthèse du silicate de soude en brûleur immergé

| | Na₂SO₄ + 2 SiO₂ → Na₂O-(SiO₂)₂ + SO₂/SO₃ | | | |
|---|---|---|---|---|
| quantité en moles | 5489 | 2 x 5489 | 5489 | 5489 |
| quantité en kg | 779 | 660 | 1000 | |

Cette synthèse se fait dans un four à brûleurs immergés, comme celui décrit dans le brevet WO-00/46161.

### 3 - Réaction de combustion apportant l'énergie nécessaire à la synthèse du silicate (estimée ici à 2042 kWh/tonne de silicate)

Pour un combustible contenant des chaînes carbonées de formule type CHₓ, et du soufre, les réactions de combustion sont :

| | | | | | | | |
|---|---|---|---|---|---|---|---|
| (3) | CHₓ | + | (1+x/4)O₂ | → | CO₂ | + | x/2 H₂O |
| | S | + | O₂ | → | SO₂ | | |

Suivant la teneur en soufre du combustible, la réaction de combustion dégage plus ou moins de SO₂ dans les fumées qui vont s'ajouter aux SO_{X} produits par la synthèse du silicate en elle-même. On note « y » le nombre de moles de SO₂ provenant de la combustion.

### 4 et 4' - conversion des oxydes de soufre en acide sulfurique

SO₂/SO₃ → H₂SO₄
quantité en moles 5489 + y 5489 + y

5489 moles de H₂SO₄ sont réintroduites dans la synthèse du sulfate de sodium (1). Les « y » moles restantes sont valorisables en dehors de cette boucle de synthèse.

### EXEMPLE 1

Cet exemple utilise pour l'étape (3) du combustible 100% sous forme de soufre (provenant notamment de la désulfuration de produits pétroliers en raffinerie).

Son pouvoir calorifique inférieur (PCI ) est de 2584 kWh/tonne de soufre.

La réaction (2) nécessite 2042 kWh, soit 790 kg de soufre (24688 moles de S).

La combustion de ce soufre produit y = 24688 moles de SO₂.

Outre les 5489 moles auto-alimentant la bouche en H₂SO₄, on obtient donc 24688 moles de H₂SO₄ supplémentaires, soit 2420 kg valorisables en dehors de la boucle.

### EXEMPLE 2

Cet exemple utilise pour l'étape (3) un combustible sous forme de fioul lourd n° 2 à 4% de soufre.

Son PCI est d'environ 10930 kWh/t. On a donc besoin de 187 kg de ce fioul pour produire une tonne de silicate.

On va donc brûler 7,5 kg de soufre provenant de ce fioul, soit 234 moles, relachant y = 234 moles de SO2.

On obtient donc 234 moles, soit 23 kg de H₂SO₄ valorisables en dehors de la boucle.

On voit donc que selon le choix du combustible, l'excès d'acide sulfurique que l'on peut obtenir par rapport à ce qui est nécessaire à la réaction (1) varie beaucoup. Toutes les solutions intermédiaires, avec l'association de fioul et de soufre, ou encore l'utilisation de pneumatiques vulcanisés, sont possibles, ce qui permet d'ajuster au mieux la combustion (3) en fonction du type de combustible le plus disponible et/ou de la quantité d'acide sulfurique qu'on veut produire.

## Revendications

1. Procédé de fabrication de composés à base de silicate(s) d'alcalins tels que Na, K et/ou d'alcalino-terreux tels que Ca, Mg et/ou de terres rares telle que Ce, éventuellement sous forme de silicates mixtes associant au moins deux de ces éléments, ledit procédé faisant intervenir une réaction de conversion (2) de sulfates desdits alcalins et/ou desdites terres rares et/ou desdits alcalino-terreux avec de la silice en silicates correspondants, l'apport thermique nécessaire à cette conversion étant fourni, au moins en partie, par une réaction de combustion (3) utilisant un ou une pluralité de brûleur(s) immergé(s), **caractérisé en ce que** pour mettre en oeuvre la réaction de combustion (3) on utilise au moins un combustible soufré et **en ce que** l'on récupère les oxydes de soufre obtenus par oxydation de composés soufrés lors de la réaction de combustion (3) ainsi que les oxydes de soufre obtenus lors de la réaction (2) de conversion des sulfates en silicates, et **en ce qu'**on leur fait subir une réaction de conversion en acide sulfurique.

2. Procédé selon la revendication précédente, **caractérisé en ce qu'**il fait également intervenir une réaction de conversion (1) d'halogénures, notamment de chlorures, desdits alcalins et/ou desdites terres rares et/ou desdits alcalino-terreux, en sulfates correspondants, lesquels interviennent ensuite dans la réaction (2).

3. Procédé selon l'une des revendications précédentes, **caractérisé en ce que** pour mettre en oeuvre la réaction de combustion (3), on utilise un combustible sous forme gazeuse comprenant un composé soufré.

4. Procédé selon la revendication précédente, **caractérisé en ce que** l'on alimente directement le(s) brûleur(s) immergé(s) avec le combustible sous forme gazeuse comprenant un composé soufré.

5. Procédé selon l'une des revendications précédentes, **caractérisé en ce que** pour mettre en oeuvre la réaction de combustion (3) on utilise un combustible sous forme liquide ou solide à base de composé soufré.

6. Procédé selon la revendication précédente, **caractérisé en ce que** l'on amène à proximité dudit (desdits) brûleur(s) immergé(s) le combustible sous forme liquide ou solide à base de composé soufré.

7. Procédé selon la revendication 2, **caractérisé en ce que** la réaction de conversion (1) des halogénures en sulfates s'effectue avec de l'acide sulfurique, tout ou partie de cet acide sulfurique provenant de la réaction (4) de conversion en acide sulfurique des oxydes de soufre provenant de la réaction (3) de combustion et de la réaction (4') de conversion en acide sulfurique des oxydes de soufre provenant de la réaction (2) de conversion des sulfates en silicates.

8. Procédé selon la revendication précédente, **caractérisé en ce que** les réactions (4) et (4') de conversion des oxydes de soufre en acide sulfurique produisent en tout plus d'acide sulfurique que ce qui est nécessaire pour la réaction (1) de conversion (1) des halogénures en sulfates.

9. Procédé selon l'une des revendications précédentes, **caractérisé en ce qu'**il fabrique du silicate de sodium par :
- conversion de NaCl par H₂SO₄ en Na₂SO₄, ainsi que de l'HCl valorisable, puis
- conversion du Na₂SO₄ en (SiO₂)ₓ-Na₂O selon la réaction de conversion (2) par de la silice avec un apport thermique utilisant des brûleurs immergés.

10. Procédé selon la revendication 2, **caractérisé en ce que** l'on récupère la chaleur des fumées du réacteur à brûleurs immergés utilisé pour la réaction (2) et qu'on l'utilise pour contribuer à l'apport thermique nécessaire à la réaction (1).

11. Procédé selon la revendication précédente ou la revendication 2 **caractérisé en ce que** la réaction (1) a lieu dans un réacteur Mannheim.

12. Procédé selon l'une des deux revendications précédentes **caractérisé en ce que** l'on récupère les oxydes de soufre dans les fumées et **en ce qu'**on les convertit en acide sulfurique.

13. Procédé selon la revendication précédente, **caractérisé en ce que** l'acide sulfurique récupéré est utilisé dans la réaction (1).

14. Utilisation du procédé selon l'une des revendications précédentes pour préparer des matières vitrifiables pour la fabrication du verre, des matières premières pour la fabrication de détergents, ou des matières premières pour la fabrication de silice précipitée.

15. Utilisation du procédé selon l'une des revendications 1 à 13 pour valoriser des dérivés soufrés et/ou hydrocarbonés et/ou carbonés, du type sous-produits de l'industrie pétrolière, en tant que combustible lors de la réaction de combustion (3) utilisant un ou plusieurs brûleur(s) immergé(s).

## Claims

1. Process for manufacturing compounds based on one or more silicates of alkali metals, such as Na, K and/or of alkaline-earth metals, such as Ca, Mg, and/or of rare earths, such as Ce, optionally in the form of mixed silicates that combine at least two of these elements, said process involving a conversion reaction (2) in which sulphates of said alkali metals and/or of said rare earths and/or of said alkaline-earth metals together with silica are converted into the corresponding silicates, the heat supply needed for this conversion being provided, at least in part, by a combustion reaction (3) using one or more submerged burners, **characterized in that**, to carry out combustion reaction (3), at least one sulphur-containing fuel is used and **in that** the sulphur oxides obtained by oxidation of sulphur compounds during combustion reaction (3) together with the sulphur oxides obtained during reaction (2) of converting the sulphates into silicates are recovered, and **in that** they are made to undergo a reaction of converting them into sulphuric acid.

2. Process according to the preceding claim, **characterized in that** it also involves a conversion reaction (1) for converting halides, especially chlorides, of said alkali metals and/or of said rare earths and/or of said alkaline-earth metals into the corresponding sulphates which are then involved in reaction (2).

3. Process according to either of the preceding claims, **characterized in that**, to carry out combustion reaction (3), a fuel in gaseous form comprising a sulphur compound, is used.

4. Process according to the preceding claim, **characterized in that** the submerged burner(s) is (are) fed directly with the fuel in gaseous form comprising a sulphur compound.

5. Process according to one of the preceding claims, **characterized in that**, to carry out combustion reaction (3), a fuel in liquid or solid form, based on a sulphur compound, is used.

6. Process according to the preceding claim, **characterized in that** the fuel in liquid or solid form, based on a sulphur compound, is brought close to said submerged burner(s).

7. Process according to Claim 2, **characterized in that** reaction (1) of converting the halides into sulphates is carried out with sulphuric acid, all or some of this sulphuric acid coming from reaction (4) of converting into sulphuric acid the sulphur oxides coming from combustion reaction (3) and from reaction (4') of converting, into sulphuric acid, the sulphur oxides coming from reaction (2) of converting the sulphates into silicates.

8. Process according to the preceding claim, **characterized in that** reactions (4) and (4') of converting the sulphur oxides into sulphuric acid produce in all more sulphuric acid than is needed for reaction (1) of converting (1) the halides into sulphates.

9. Process according to one of the preceding claims, **characterized in that** it manufactures sodium silicate by:
- conversion of NaCl by H₂SO₄ into Na₂SO₄, together with HCl that can be utilized, and then
- conversion of the Na₂SO₄ into (SiO₂)ₓ-Na₂O according to conversion reaction (2) by silica with heat supply using submerged burners.

10. Process according to Claim 2, **characterized in that** the heat of the flue gases from the-submerged-burner reactor used for reaction (2) is recovered and used to contribute in applying the heat needed for reaction (1).

11. Process according to the preceding Claim 1 or Claim 2, **characterized in that** reaction (1) takes place in a Mannheim reactor.

12. Process according to one of the two preceding claims, **characterized in that** the sulphur oxides are recovered from the flue gases and **in that** they are converted into sulphuric acid.

13. Process according to the preceding claim, **characterized in that** the sulphuric acid recovered is used in reaction (1).

14. Use of the process according to one of the preceding claims for preparing batch materials for the manufacture of glass, raw materials for the manufacture of detergents, or raw materials for the manufacture of precipitated silica.

15. Use of the process according to one of Claims 1 to 13 for utilizing the sulphur-based and/or hydrocarbon-based and/or carbon-based derivatives of the oil industry by-product type as fuel in combustion reaction (3) using one or more submerged burners.

## Patentansprüche

1. Verfahren zur Herstellung von Verbindungen auf der Basis eines oder mehrerer Silicate von Alkalimetallen wie Na und K und/oder Erdalkalimetallen wie Ca und Mg und/oder Seltenerdmetallen wie Ce, gegebenenfalls in Form von Mischsilicaten, in welchen mindestens zwei dieser Elemente vorhanden sind, in welchem eine Umwandlungsreaktion (2) von Sulfaten dieser Alkalimetalle und/oder Seltenerdmetalle und/oder Erdalkalimetalle mit Siliciumdioxid in die entsprechenden Silicate stattfindet, wobei die Zufuhr der für diese Umwandlung erforderlichen Wärme wenigstens teilweise durch eine Verbrennungsreaktion (3) erfolgt, bei welcher ein oder mehrere Tauchbrenner verwendet werden, **dadurch gekennzeichnet, dass** zur Durchführung der Verbrennungsreaktion (3) mindestens ein schwefelhaltiger Brennstoff verwendet wird, dass die Schwefeloxide, die durch die Oxidation der schwefelhaltigen Verbindungen während der Verbrennungsreaktion (3) sowie die Schwefeloxide, die während der Reaktion (2) der Umwandlung der Sulfate in Silicate erhalten werden, zurückgewonnen werden, und dass sie einer Umwandlungsreaktion zu Schwefelsäure unterworfen werden.

2. Verfahren nach dem vorhergehenden Anspruch, **dadurch gekennzeichnet, dass** auch eine Reaktion (1) der Umwandlung von Halogeniden, insbesondere Chloriden, der Alkalimetalle und/oder Seltenerdmetalle und/oder Erdalkalimetalle in die entsprechenden Sulfate, die anschließend an der Reaktion (2) teilnehmen, durchgeführt wird.

3. Verfahren nach einem der vorhergehenden Ansprüche, **dadurch gekennzeichnet, dass** zur Durchführung der Verbrennungsreaktion (3) ein eine Schwefelverbindung umfassender gasförmiger Brennstoff verwendet wird.

4. Verfahren nach dem vorhergehenden Anspruch, **dadurch gekennzeichnet, dass** der/die Tauchbrenner direkt mit dem eine Schwefelverbindung umfassenden gasförmigen Brennstoff gespeist wird.

5. Verfahren nach einem der vorhergehenden Ansprüche, **dadurch gekennzeichnet, dass** zur Durchführung der Verbrennungsreaktion (3) ein flüssiger oder fester Brennstoff auf der Basis einer Schwefelverbindung verwendet wird.

6. Verfahren nach dem vorhergehenden Anspruch, **dadurch gekennzeichnet, dass** der flüssige oder feste Brennstoff auf der Basis einer Schwefelverbindung in die Nähe des/der Tauchbrenner/s gebracht wird.

7. Verfahren nach Anspruch 2, **dadurch gekennzeichnet, dass** die Umwandlungsreaktion (1) der Halogenide in Sulfate mit Schwefelsäure erfolgt, die ganz oder teilweise aus der Reaktion (4) der Umwandlung der aus der Verbrennungsreaktion (3) stammenden Schwefeloxide in Schwefelsäure und der Reaktion (4') der Umwandlung der aus der Umwandlungsreaktion (2) der Sulfate in Silicate stammenden Schwefeloxide in Schwefelsäure stammt.

8. Verfahren nach dem vorhergehenden Anspruch, **dadurch gekennzeichnet, dass** durch die Umwandlungsreaktionen (4) und (4') der Schwefeloxide in Schwefelsäure insgesamt mehr Schwefelsäure erzeugt wird, als für die Umwandlungsreaktion (1) der Halogenide in Sulfate notwendig ist.

9. Verfahren nach einem der vorhergehenden Ansprüche, **dadurch gekennzeichnet, dass** Natriumsilicat durch:
- Umsetzung von NaCl mit H₂SO₄ zu Na₂SO₄ sowie verwertbarer HCl und anschließend
- Umsetzung des Na₂SO₄ mit Siliciumdioxid zu (SiO₂)ₓ-Na₂O gemäß der Umwandlungsreaktion (2) mit einer Wärmezufuhr, bei welcher Tauchbrenner verwendet werden,
hergestellt wird.

10. Verfahren nach Anspruch 2, **dadurch gekennzeichnet, dass** die Wärme aus den Abgasen des Tauchbrennerreaktors, der für die Reaktion (2) verwendet wird, zurückgewonnen wird, und dass sie verwendet wird, um zu der für die Reaktion (1) notwendigen Wärmezufuhr beizutragen.

11. Verfahren nach dem vorhergehenden Anspruch oder nach Anspruch 2, **dadurch gekennzeichnet, dass** die Reaktion (1) in einem Mannheim-Reaktor stattfindet.

12. Verfahren nach einem der zwei vorhergehenden Ansprüche, **dadurch gekennzeichnet, dass** die Schwefeloxide aus den Abgasen zurückgewonnen werden, und dass sie in Schwefelsäure umgewandelt werden.

13. Verfahren nach dem vorhergehenden Anspruch, **dadurch gekennzeichnet, dass** die zurückgewonnene Schwefelsäure bei der Reaktion (1) verwendet wird.

14. Anwendung des Verfahrens nach einem der vorhergehenden Ansprüche auf die Herstellung von Glasrohstoffen für die Glasproduktion, von Ausgangsstoffen für die Waschmittelproduktion oder von Ausgangsstoffen für die Produktion von Fällungskieselsäure.

15. Anwendung des Verfahrens nach einem der Ansprüche 1 bis 13 auf die Verwertung von Schwefel- und/oder Kohlenwasserstoff- und/oder Kohlenstoffverbindungen, die Nebenprodukte der Erdölindustrie sind, als Brennstoffe für die Verbrennungsreaktion (3), bei welcher ein oder mehrere Tauchbrenner verwendet werden.
